# EUROPEAN PATENT APPLICATION

(11) **EP 4 641 430 A1**
(43) Date of publication of application: **29.10.2025**
(21) Application number: 23906795.2
(22) Date of filing: 11.12.2023
(51) Int. Cl.: G06F 30/18, G06F 30/12, G06Q 50/08, G06F 113/14

(54) **PIPELINE DIAGRAM CREATION SUPPORT DEVICE, PIPELINE CONSTRUCTION WORK INFORMATION MANAGEMENT DEVICE, PIPELINE DIAGRAM CREATION SUPPORT SYSTEM, PIPELINE DIAGRAM CREATION SUPPORT SYSTEM CONTROL METHOD, AND PIPELINE DIAGRAM CREATION SUPPORT SYSTEM CONTROL PROGRAM**

(30) Priority: 22.12.2022 JP 2022205972
(71) Applicant: Kubota Corporation, Osaka 556-8601 (JP)
(72) Inventor: YAMASHITA Akira, Amagasaki-shi, Hyogo 660-0095 (JP); HARADA Kazuma, Amagasaki-shi, Hyogo 660-0095 (JP); TSUJI Kengo, Tokyo 104-8307 (JP); ISHIDA Yosuke, Tokyo 104-8307 (JP)
(74) Representative: Müller-Boré & Partner Patentanwälte PartG mbB
(86) International application number: PCT/JP2023/044194
(87) International publication number: WO 2024/135430

(57) **Abstract**

In a pipeline diagram creation support device for supporting creation of a pipeline diagram, a configuration capable of creating a pipeline diagram by easily connecting a pipeline diagram to an already created pipeline diagram is provided. A pipeline diagram creation support device 1 includes: a display 11 that displays an input region on which an input operation is performed in creating the pipeline diagram; a pipeline diagram creator 12 that creates the pipeline diagram by the input operation on the input region S; and a storage 13 that stores a pipeline diagram created by the pipeline diagram creator 12. The pipeline diagram creator 12 creates a pipeline diagram by connecting a symbol to a connected portion specified in the pipeline diagram stored in the storage 13 by the input operation on the input region or creates a new pipeline diagram by connecting, to the connected portion, a pipeline diagram as a connection target that is either another pipeline diagram stored in the storage 13 or another pipeline diagram created by the input operation on the input region.

## Description

### TECHNICAL FIELD

The present teaching relates to a pipeline diagram creation support device, a pipeline construction work information management device, a pipeline diagram creation support system, a pipeline diagram creation support system control method, and a pipeline diagram creation support system control program, for supporting creation of a pipeline diagram.

### BACKGROUND ART

In general, in pipeline construction, construction is performed based on a pipeline diagram, and it is sometimes necessary to correct the pipeline diagram or create a new pipeline diagram in accordance with construction situations at the site. A pipeline diagram creation device for creating such a pipeline diagram is known. Patent Document 1, for example, discloses a pipeline diagram creation device including: a construction management information storage that stores construction management information including position information indicating a position of a joint portion between two pipes and pipe information of joined pipes joined at the joint portion and acquired for each joint portion of pipes; a junction drawing processor that draws junction symbols at a position on a pipeline diagram layer corresponding to the position information read out from the construction management information storage; and a pipeline drawing processor connecting the junction symbols drawn on the pipeline diagram layer by the junction drawing processor to each other by a linear pipeline symbol corresponding to the pipe information read out from the construction management information storage.

In the pipeline diagram creation device, after the junction symbols are drawn at positions on the pipeline diagram layer, the junction symbols drawn on the pipeline diagram layer are connected to each other by a linear pipeline symbol corresponding to pipe information, thereby creating a pipeline diagram.

### CITATION LIST

### PATENT DOCUMENTS

Patent Document 1: Japanese Patent Application Publication No. 2017-49921

### SUMMARY OF INVENTION

### TECHNICAL PROBLEM

In the pipeline diagram creation device of Patent Document 1, the junction symbols are drawn at the positions on the pipeline diagram layer and are connected to each other by the pipeline symbol. Thus, in the pipeline diagram creation device, in creating a pipeline diagram, the pipeline needs to be extended by repeating the work of drawing junction symbols on the pipeline diagram layer and then selecting the pipeline symbol.

Actual pipeline construction includes not only the case of performing construction for continuously connecting pipes but also the case of constructing discontinuous pipelines separately and then connecting these pipes and the case of temporarily interrupting pipeline construction and then constructing a new pipeline to connect to the completed pipeline.

In such cases, in creating a pipeline diagram, it is required to easily connect a plurality of pipeline diagrams or to easily create a new pipeline diagram by connecting a pipeline diagram to an already created pipeline diagram. That is, a device for supporting creation of a pipeline diagram is required to create a pipeline diagram by easily connecting the pipeline diagram to an already created pipeline diagram.

It is therefore an object of the present teaching to provide a configuration capable of creating a pipeline diagram by easily connecting a pipeline diagram to an already created pipeline diagram in a pipeline diagram creation support device for supporting creation of a pipeline diagram.

### SOLUTION TO PROBLEM

A pipeline diagram creation support device according to one embodiment of the present teaching is a device for supporting creation of a pipeline diagram. The pipeline diagram creation support device includes: a display that displays an input region on which an input operation is performed in creating the pipeline diagram; a pipeline diagram creator that creates the pipeline diagram by the input operation on the input region; and a storage that stores the pipeline diagram created by the pipeline diagram creator. The pipeline diagram creator creates a pipeline diagram by connecting a symbol to a connected portion specified in the pipeline diagram stored in the storage by the input operation on the input region, or creates a new pipeline diagram by connecting, to the connected portion, a pipeline diagram as a connection target that is either another pipeline diagram stored in the storage or another pipeline diagram created by the input operation on the input region. (first configuration)

With the configuration described above, it is possible to create a pipeline diagram by connecting a symbol to a connected portion specified in the pipeline diagram stored in the storage by the input operation on the input region, or to create a new pipeline diagram by connecting, to the connected portion, a pipeline diagram as a connection target that is either another pipeline diagram stored in the storage or another pipeline diagram created by the input operation on the input region.

This makes it easy to create a pipeline diagram connected to the connected portion of the pipeline diagram created and stored in the storage. Thus, a pipeline diagram can be easily created in accordance with the progress of construction and other situations.

In the first configuration, the pipeline diagram creator specifies the connected portion in the pipeline diagram stored in the storage by the input operation on the input region. (second configuration)

This makes it easy to specify the connected portion in the pipeline diagram stored in the storage. Accordingly, pipeline diagrams can be easily connected to each other, and a pipeline diagram can be easily created by connecting symbols or the like to a created pipeline diagram. Thus, a pipeline diagram can be easily created in accordance with the progress of construction and other situations.

In the first configuration, the storage individually stores pipeline diagrams of pipes in a plurality of construction sections, created by the pipeline diagram creator. The pipeline diagram creator creates the new pipeline diagram by connecting a connecting portion of a pipeline diagram created in the input region by the input operation on the input region, to the connected portion specified in each of the pipeline diagrams of pipes in the plurality of construction sections by the input operation on the input region. (third configuration)

Accordingly, a new pipeline diagram can be created by connecting the connecting portion of the pipeline diagram created in the input region to the connected portion specified in each of the plurality of discontinuous pipeline diagrams. As a result, even in the case of performing discontinuous piping construction, a pipeline diagram can be easily created.

In the first configuration, the pipeline diagram creation support device further includes a region selector that selects a plurality of regions for which an input operation is performed, in a grid-shaped input region as the input region displayed by the display. The pipeline diagram creator creates the new pipeline diagram based on the plurality of regions selected by the region selector. (fourth configuration)

Accordingly, a pipeline diagram can be intuitively and easily created by the input operation on the grid-shaped input region.

A pipeline construction work information management device according to one embodiment of the present teaching includes the pipeline diagram creation support device having any one of the first through fourth configurations. The pipeline construction work information management device includes: a construction information acquirer that acquires construction information of pipeline construction; a construction information processor that associates a position of a pipeline in the pipeline diagram created by the pipeline diagram creation support device with the construction information acquired by the construction information acquirer; and a construction information display that displays the pipeline diagram and specifies the position of the pipeline in the pipeline diagram to thereby display the construction information associated with the position. (fifth configuration)

Accordingly, construction information of pipeline construction can be easily browsed from the pipeline diagram created by the pipeline diagram creation support device. Thus, the pipeline construction work information management device capable of enhancing working efficiency of pipeline construction can be obtained.

A pipeline diagram creation support system according to one embodiment of the present teaching includes a support server and a computation terminal capable of communicating with the support server and supports creation of a pipeline diagram. The computation terminal includes a display that displays an input region on which an input operation is performed in creating the pipeline diagram, a partial pipeline diagram creator that creates a partial pipeline diagram by the input operation on the input region, and a terminal outputter that outputs, to the support server, partial pipeline diagram information on the partial pipeline diagram created by the partial pipeline diagram creator. The support server includes a partial pipeline diagram information acquirer that acquires the partial pipeline diagram information from the computation terminal, a storage that stores the partial pipeline diagram information acquired by the partial pipeline diagram information acquirer, and an entire pipeline diagram creator that creates an entire pipeline diagram by using at least a part of the partial pipeline diagram information acquired by the partial pipeline diagram information acquirer and the partial pipeline diagram information stored in the storage. The partial pipeline diagram creator creates a partial pipeline diagram by connecting a symbol to a connected portion specified in the partial pipeline diagram included in the partial pipeline diagram information stored in the storage by the input operation on the input region, or the entire pipeline diagram creator creates the entire pipeline diagram by connecting, to the connected portion specified in the partial pipeline diagram included in the partial pipeline diagram information stored in the storage, a partial pipeline diagram as a connection target that is either another partial pipeline diagram included in the partial pipeline diagram information acquired by the partial pipeline diagram information acquirer or another partial pipeline diagram included in the partial pipeline diagram information stored in the storage.

### (sixth configuration)

With this configuration, it is possible to create the entire pipeline diagram by connecting a symbol to the connected portion specified in the partial pipeline diagram stored in the storage by the input operation on the input region, or to create the entire pipeline diagram by connecting, to the connected portion, a partial pipeline diagram as a connection target that is either another pipeline diagram stored in the storage or another partial pipeline diagram created by the input operation on the input region.

By using the partial pipeline diagram, the support server can create the entire pipeline diagram. Accordingly, the support server can achieve creation of the entire pipeline diagram, which requires a large computation load.

Thus, with the configuration described above, the entire pipeline diagram can be easily created by using a small-size computation terminal such as a portable terminal. Accordingly, an entire pipeline diagram can be created at the site of pipeline construction.

In the sixth configuration, the partial pipeline diagram creator specifies the connected portion in the partial pipeline diagram included in the partial pipeline diagram information stored in the storage, by the input operation on the input region. (seventh configuration)

Accordingly, the connected portion can be easily specified in the partial pipeline diagram stored in the storage of the support server. Thus, partial pipeline diagrams can be easily connected to each other, and an entire pipeline diagram connected to the partial pipeline diagram stored in the storage can be easily created. Thus, an entire pipeline diagram can be easily created in accordance with the progress of construction and other situations.

In the sixth configuration, the storage individually stores partial pipeline diagram information on partial pipeline diagrams of pipes in a plurality of construction sections, created by the partial pipeline diagram creator. The entire pipeline diagram creator creates the entire pipeline diagram by connecting, to a connected portion specified in each of the partial pipeline diagrams of pipes in the plurality of construction sections, a connecting portion of a partial pipeline diagram as a connection target that is either a partial pipeline diagram included in the partial pipeline diagram information acquired by the partial pipeline diagram information acquirer or a partial pipeline diagram included in the partial pipeline diagram information stored in the storage. (eighth configuration)

With this configuration, the connecting portion of the partial pipeline diagram as the connection target is connected to the connected portion specified in each of the plurality of discontinuous partial pipeline diagrams to create an entire pipeline diagram. As a result, even in the case of performing discontinuous piping construction, an entire pipeline diagram can be easily created.

In the sixth configuration, the display displays a grid-shaped input region as the input region. The computation terminal further includes a region selector that selects a plurality of regions for which the input operation is performed on the input region. The partial pipeline diagram creator creates the partial pipeline diagram based on the plurality of regions selected by the region selector. (ninth configuration)

Accordingly, a partial pipeline diagram can be intuitively and easily created by the input operation on the grid-shaped input region.

In the sixth configuration, the support server further includes a support server outputter that outputs, to the computation terminal, at least a part of entire pipeline diagram information on the entire pipeline diagram created by the entire pipeline diagram creator. The computation terminal further includes an entire pipeline diagram information acquirer that acquires at least a part of the entire pipeline diagram information from the support server. The display of the computation terminal displays at least a part of the entire pipeline diagram information acquired by the entire pipeline diagram information acquirer. (tenth configuration)

With this configuration, at least a part of the entire pipeline diagram created by the support server can be displayed on the display of the computation terminal. Thus, for example, even at the site of pipeline construction, it is possible to easily check at least a part of the entire pipeline diagram using the computation terminal. As a result, working efficiency of pipeline construction can be enhanced.

A pipeline diagram creation support system control method according to one embodiment of the present teaching is a method for controlling a pipeline diagram creation support system that includes a support server and a computation terminal capable of communicating with the support server and supports creation of a pipeline diagram. The pipeline diagram creation support system control method includes: an input region display step of causing a display of the computation terminal to display an input region on which an input operation is performed in creating the pipeline diagram; a partial pipeline diagram creation step of causing the computation terminal to create a partial pipeline diagram by the input operation on the input region displayed on the display of the computation terminal; a partial pipeline diagram information output step of causing the computation terminal to output, to the support server, partial pipeline diagram information on the partial pipeline diagram created in the partial pipeline diagram creation step; a partial pipeline diagram information acquisition step of causing the support server to acquire the partial pipeline diagram information from the computation terminal; a storage step of causing the support server to store the partial pipeline diagram information acquired in the partial pipeline diagram information acquisition step; and an entire pipeline diagram creation step of causing the support server to create an entire pipeline diagram by using at least a part of the partial pipeline diagram information acquired in the partial pipeline diagram information acquisition step and the partial pipeline diagram information stored in the support server. In the partial pipeline diagram creation step, the partial pipeline diagram is created by connecting a symbol to a connected portion specified in the partial pipeline diagram included in the partial pipeline diagram information stored in the support server by the input operation on the input region, or in the entire pipeline diagram creation step, the entire pipeline diagram is created by connecting, to the connected portion specified in the partial pipeline diagram included in the partial pipeline diagram information stored in the support server, a partial pipeline diagram as a connection target that is either another partial pipeline diagram included in the partial pipeline diagram information acquired in the partial pipeline diagram information acquisition step or another partial pipeline diagram included in the partial pipeline diagram information stored in the support server. (first method)

With the method described above, it is possible to create the entire pipeline diagram by connecting symbols or the like to the connected portion specified in the partial pipeline diagram stored in the support server by the input operation on the input region, or to create the entire pipeline diagram by connecting, to the connected portion, a partial pipeline diagram as a connection target that is either another pipeline diagram stored in the support server or another pipeline diagram created by the input operation on the input region.

By using the partial pipeline diagram, the support server can create the entire pipeline diagram. Accordingly, the support server can achieve creation of the entire pipeline diagram, which requires a large computation load.

Thus, with the method described above, the entire pipeline diagram can be easily created by using the small-size computation terminal such as a portable terminal. Accordingly, an entire pipeline diagram can be created at the site of pipeline construction.

In the first method, in the partial pipeline diagram creation step, the connected portion in the partial pipeline diagram included in the partial pipeline diagram information stored in the support server is specified by the input operation on the input region. (second method)

Accordingly, the connected portion can be easily specified in the partial pipeline diagram stored in the support server. Thus, partial pipeline diagrams can be easily connected to each other, and the entire pipeline diagram connected to the partial pipeline diagram stored in the support server can be easily created. Thus, an entire pipeline diagram can be easily created in accordance with the progress of construction and other situations.

In the first method, in the storage step, partial pipeline diagram information on partial pipeline diagrams of pipes in a plurality of construction sections created in the partial pipeline diagram creation step is individually stored. In the entire pipeline diagram creation step, the entire pipeline diagram is created by connecting, to the connected portion specified in each of the partial pipeline diagrams of pipes in the plurality of construction sections, a connecting portion of a partial pipeline diagram as a connection target that is either a partial pipeline diagram included in the partial pipeline diagram information acquired in the partial pipeline diagram information acquisition step or a partial pipeline diagram included in the partial pipeline diagram information stored in the support server. (third method)

With this method, the connecting portion of the partial pipeline diagram as the connection target is connected to the connected portion specified in each of the plurality of discontinuous partial pipeline diagrams to create an entire pipeline diagram. As a result, even in the case of performing discontinuous piping construction, an entire pipeline diagram can be easily created.

In the first method, the pipeline diagram creation support system control method further includes a region selecting step of selecting a plurality of regions for which an input operation is performed, in a grid-shaped input region as the input region displayed in the input region display step. In the partial pipeline diagram creation step, the partial pipeline diagram is created based on the plurality of regions selected in the region selecting step. (fourth method)

Accordingly, a partial pipeline diagram can be intuitively and easily created by the input operation on the grid-shaped input region.

A pipeline diagram creation support system control program according to one embodiment of the present teaching is a program for controlling a pipeline diagram creation support system that includes a support server and a computation terminal capable of communicating with the support server and supports creation of a pipeline diagram. The pipeline diagram creation support system control program causes the computation terminal to display an input region on which an input operation is performed in creating the pipeline diagram, create a partial pipeline diagram by the input operation on the input region, and output, to the support server, partial pipeline diagram information on the created partial pipeline diagram, causes the support server to acquire the partial pipeline diagram information on the partial pipeline diagram created by the computation terminal, store the acquired partial pipeline diagram information in a storage, and create an entire pipeline diagram by using at least a part of the acquired partial pipeline diagram information and the partial pipeline diagram information stored in the storage, and causes the computation terminal to create a partial pipeline diagram by connecting a symbol to a connected portion specified in the partial pipeline diagram included in the partial pipeline diagram information stored in the storage by the input operation on the input region, or causes the support server to create the entire pipeline diagram by connecting, to the connected portion specified in the partial pipeline diagram included in the partial pipeline diagram information stored in the storage, a partial pipeline diagram as a connection target that is either another partial pipeline diagram included in the acquired partial pipeline diagram information or another partial pipeline diagram included in the partial pipeline diagram information stored in the storage, in creating the entire pipeline diagram. (first program)

With the configuration described above, it is possible to create the entire pipeline diagram by connecting symbols or the like to the connected portion specified in the partial pipeline diagram stored in the storage by the input operation on the input region, or to create the entire pipeline diagram by connecting, to the connected portion, a partial pipeline diagram as a connection target that is either another pipeline diagram stored in the storage or another pipeline diagram created by the input operation on the input region.

By using the partial pipeline diagram, the support server can create the entire pipeline diagram. Accordingly, the support server can achieve creation of the entire pipeline diagram, which requires a large computation load.

Thus, with the method described above, the entire pipeline diagram can be easily created by using the small-size computation terminal such as a portable terminal. Accordingly, an entire pipeline diagram can be created at the site of pipeline construction.

In the first program, the program causes the computation terminal to specify the connected portion in the partial pipeline diagram included in the partial pipeline diagram information stored in the storage by an input operation on the input region. (second program).

Accordingly, the connected portion can be easily specified in the partial pipeline diagram stored in the storage of the support server. Thus, partial pipeline diagrams can be easily connected to each other, and an entire pipeline diagram connected to the partial pipeline diagram stored in the storage can be easily created. Thus, an entire pipeline diagram can be easily created in accordance with the progress of construction and other situations.

In the first program, the program causes the support server to individually store, in the storage, partial pipeline diagram information on partial pipeline diagrams of pipes in a plurality of construction sections, created by the computation terminal, and create the entire pipeline diagram by connecting, to the connected portion, a partial pipeline diagram as a connection target that is either another partial pipeline diagram included in the acquired partial pipeline diagram information or another partial pipeline diagram included in the partial pipeline diagram information stored in the storage, in creating the entire pipeline diagram. (third program)

With this program, the partial pipeline diagram as the connection target is connected to the connected portion specified in each of the plurality of discontinuous partial pipeline diagrams to create an entire pipeline diagram. As a result, even in the case of performing discontinuous piping construction, an entire pipeline diagram can be easily created.

In the first program, the program causes the computation terminal to display a grid-shaped input region on a display, select a plurality of regions for which an input operation is performed on the input region, and create the partial pipeline diagram based on the selected plurality of regions. (fourth program)

Accordingly, a partial pipeline diagram can be intuitively and easily created by the input operation on the grid-shaped input region.

### ADVANTAGEOUS EFFECTS OF INVENTION

A pipeline diagram creation support device according to one embodiment of the present teaching supports creation of a pipeline diagram. The pipeline diagram creation support device includes: the display that displays the input region on which the input operation is performed in creating the pipeline diagram; the pipeline diagram creator that creates the pipeline diagram by the input operation on the input region; and the storage that stores the pipeline diagram created by the pipeline diagram creator. The pipeline diagram creator creates a pipeline diagram by connecting the symbol to the connected portion specified in the pipeline diagram stored in the storage by the input operation on the input region, or creates a new pipeline diagram by connecting, to the connected portion, a pipeline diagram as a connection target that is either another pipeline diagram stored in the storage or another pipeline diagram created by the input operation on the input region.

This makes it easy to create a pipeline diagram connected to the connected portion of the pipeline diagram created and stored in the storage. Thus, a pipeline diagram can be easily created in accordance with the progress of construction and other situations.

### BRIEF DESCRIPTION OF DRAWINGS

[FIG. 1] FIG. 1 is a functional block diagram illustrating a schematic configuration of a pipeline diagram creation support device according to a first embodiment of the present teaching.
[FIG. 2] FIG. 2 is a view illustrating an example of a pipeline diagram created by a pipeline diagram creator.
[FIG. 3] FIG. 3 is a view illustrating an example of a pipeline diagram obtained by connecting the pipeline diagram of FIG. 2 to a connected portion of a pipeline diagram stored in a storage by the pipeline diagram creator.
[FIG. 4] FIG. 4 is a view illustrating an example of a pipeline diagram obtained by connecting the pipeline diagram of FIG. 2 to a pipeline diagram of pipes in two construction sections stored in the storage by the pipeline diagram creator.
[FIG. 5] FIG. 5 is a functional block diagram illustrating a schematic configuration of a pipeline diagram creation support device according to a variation.
[FIG. 6] FIG. 6 is a view illustrating an example of a state where a plurality of regions constituting a grid-shaped input region are selected by a region selector.
[FIG. 7] FIG. 7 is a functional block diagram illustrating a schematic configuration of a pipeline construction work information management device including the pipeline diagram creation support device according to the first embodiment.
[FIG. 8] FIG. 8 is a view illustrating an example of a display screen on which a pipeline diagram is associated with construction information by a construction information processor.
[FIG. 9] FIG. 9 is a functional block diagram illustrating a schematic configuration of a pipeline diagram creation support system for supporting creation of a pipeline diagram.
[FIG. 10] FIG. 10 is a flowchart showing a pipeline diagram creation support system control method performed by the pipeline diagram creation support system.
[FIG. 11] FIG. 11 is a functional block diagram illustrating a schematic configuration of a pipeline diagram creation support system according to a variation.
[FIG. 12] FIG. 12 is a flowchart showing a pipeline diagram creation support system control method performed by the pipeline diagram creation support system according to the variation.

### DESCRIPTION OF EMBODIMENT

Embodiments will be described hereinafter with reference to the drawings. In the drawings, the same or corresponding parts are denoted by the same reference characters, and description thereof will not be repeated. The dimensions of components in the drawings do not strictly represent actual dimensions of the components and dimensional proportions of the components.

### [First Embodiment]

### (Pipeline Diagram Creation Support Device)

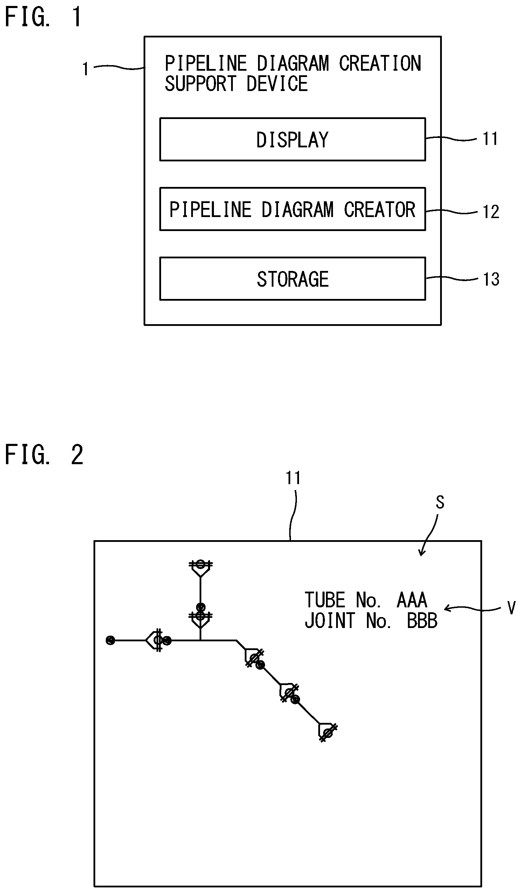

FIG. 1 is a functional block diagram illustrating a schematic configuration of a pipeline diagram creation support device 1 according to a first embodiment of the present teaching. The pipeline diagram creation support device 1 supports creation of a pipeline diagram showing a pipeline of water pipes. The pipeline diagram creation support device 1 is capable of creating a pipeline diagram by connecting symbols indicating pipes and other components to an already created pipeline diagram or capable of creating a new pipeline diagram by connecting another pipeline diagram to the already created pipeline diagram.

The pipeline diagram creation support device 1 includes a display 11, a pipeline diagram creator 12, and a storage 13. The pipeline diagram creation support device 1 may be implemented by a computation processing device such as a computer or a portable terminal capable of performing computation processing.

The display 11 displays an input region S on which an input operation can be performed. The display 11 is constituted by, for example, a display that displays an image. The display 11 may be a touch panel display enabling a direct input or a display capable of displaying a result of an input operation on an unillustrated input operator. In a case where the pipeline diagram creation support device 1 is constituted by a portable terminal, the display 11 is a display screen of the portable terminal.

The display 11 displays a pipeline diagram created by the pipeline diagram creator 12 as described later. The display 11 may display the pipeline diagram in the input region S or may display a pipeline diagram in an unillustrated pipeline diagram display region. The display 11 may display an image other than the input region S and the pipeline diagram display region.

Display of images including the input region S and the pipeline diagram displayed on the display 11 is controlled by an unillustrated display controller.

The pipeline diagram creator 12 creates a pipeline diagram to be displayed on the display 11 using pipe information by an input operation on the input region S. For example, the pipeline diagram creator 12 creates the pipeline diagram in the input region S by an input operation of connecting symbols of pipes selected in the input region S. FIG. 2 is a view illustrating an example of a pipeline diagram created by the pipeline diagram creator 12 and displayed in the input region S of the display 11. The pipeline diagram creator 12 may create the pipeline diagram in a region other than the input region S. For example, the pipeline diagram creator 12 may create a pipeline diagram in an unillustrated pipeline diagram display region.

The pipe information is, for example, a pipe model and a nominal diameter of a pipe. That is, the pipe information includes a pipe type, a joint model, the presence/absence of an inner coating, a pipe size, and so forth.

The pipe information used in creating a pipeline diagram by the pipeline diagram creator 12 may be information set in the pipeline diagram creation support device 1 beforehand, or may be selected from a table or the like in creating the pipeline diagram by the pipeline diagram creator 12.

The storage 13 stores pipeline diagram information on the pipeline diagram created by the pipeline diagram creator 12. The pipeline diagram information also includes information on a connected portion of the pipeline diagram described later. The storage 13 is constituted by, for example, a storage device such as a hard disk device or a memory, or a storage medium.

The pipeline diagram creator 12 is capable of connecting another pipeline diagram to a connected portion specified in the pipeline diagram by the input operation on the input region S. Specifically, the pipeline diagram creator 12 is capable of creating a pipeline diagram by connecting a symbol to the connected portion specified in the pipeline diagram stored in the storage 13 by an input operation on the input region S, and capable of creating a new pipeline diagram by connecting, to the connected portion, a pipeline diagram as a connection target that is either another pipeline diagram stored in the storage 13 or another pipeline diagram created by the input operation on the input region S.

The connected portion is specified by the pipeline diagram creator 12 with respect to a pipeline diagram to be connected, by the input operation on the input region S. Character V shown in FIG. 2 indicates an example of a connected portion of the pipeline diagram specified by the input operation on the input region S. That is, in the example illustrated in FIG. 2, the pipeline diagram shown in FIG. 2 is connected to a pipe number ("PIPE No." in FIG. 2) and a joint number ("JOINT No." in FIG. 2) indicated by character V. Information on the connected portion is included in the pipeline diagram information as described above, and thus, is stored in the storage 13.

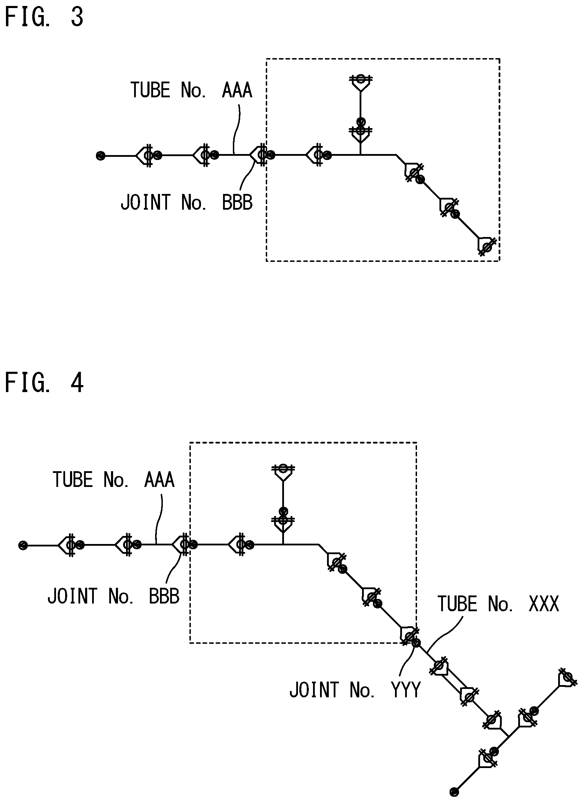

FIG. 3 is a view illustrating an example of a pipeline diagram obtained by connecting the pipeline diagram of FIG. 2 to the connected portion of the pipeline diagram stored in the storage 13 by the pipeline diagram creator 12. The pipe number (PIPE No.) and the joint number (JOINT No.) in FIG. 3 are the same as the pipe number and the joint number indicated by character V in FIG. 2. In FIG. 3, the pipeline diagram shown in FIG. 2 is a portion enclosed by a chain line.

As illustrated in FIG. 3, the pipeline diagram creator 12 connects the connecting portion of the pipeline diagram shown in FIG. 2 to a connected portion (pipe No. AAA, joint No. BBB) of the pipeline diagram stored in the storage 13. In the example illustrated in FIG. 3, a left end portion of the pipeline diagram shown in FIG. 2 is connected to the connected portion of the pipeline diagram stored in the storage 13. The present teaching is not limited to this example, and a portion to be connected to the connected portion in the pipeline diagram in FIG. 2 may be specified by an input operation on the input region S.

The connected portion may be specified by inputting a pipe number and a joint number as described above, by redrawing the connected portion in the input region S or by selecting an image drawn in the input region S. The connected portion may be specified by an input operation on the input region S or by an input operation on another region displayed on the display 11. The connected portion is not limited to specification by an input operation, but may be determined based on the position of a pipeline diagram stored in the storage 13, such as an end portion of the pipeline diagram, or may be determined based on other information such as information on a construction plan.

The pipeline diagram creator 12 may connect the pipeline diagram shown in FIG. 2 to connected portions of pipeline diagrams of pipes in a plurality of construction sections stored in the storage 13. FIG. 4 is a view illustrating an example of a pipeline diagram obtained by connecting a connecting portion of the pipeline diagram shown in FIG. 2 (portion indicated by broken line in FIG. 4) to pipeline diagrams of pipes in two construction sections stored in the storage 13 by the pipeline diagram creator 12. In the example illustrated in FIG. 4, the pipeline diagram creator 12 specifies connected portions (PIPE No. AAA, JOINT No. BBB, PIPE No. XXX, JOINT No. YYY) in the pipeline diagrams of pipes in the two construction sections stored in the storage 13 by the input operation on the input region S. Specifically, the pipeline diagram creator 12 specifies the connected portion of one of the two pipeline diagrams as pipe No. AAA, joint No. BBBB, and specifies the connected portion of the other one of the two pipeline diagram as No. XXX, joint No. YYY, by an input operation on the input region S.

In this embodiment, the construction section is a section in which construction work is performed within a predetermined period in pipeline construction and continuous pipeline diagrams are created in this range.

As illustrated in FIG. 4, the pipeline diagram creator 12 connects the connecting portion of the pipeline diagram shown in FIG. 2 to each of the specified connected portions of the two pipeline diagrams. The connecting portion of the pipeline diagram shown in FIG. 2 may be specified by an input operation on the input region S in a manner similar to the specification of the connected portions, or an end portion of the pipeline diagram shown in FIG. 2 may be specified automatically.

As described above, since the pipeline diagram creator 12 can connect another pipeline diagram to connected portions in pipeline diagrams of pipes in a plurality of construction sections stored in the storage 13, the plurality of pipeline diagrams can be created at different timings or may be created by an input operation on different devices. Accordingly, in a case where a plurality of pipeline constructions is performed in parallel, a case where different operators create pipeline diagrams, or other cases, one pipeline diagram can be easily created by connecting a plurality of pipeline diagrams.

Although not particularly shown, the present teaching is not limited to the case of connecting a plurality of pipeline diagrams as described above, the pipeline diagram creator 12 may create a pipeline diagram by connecting symbols indicating pipes or other components to the connected portion of the pipeline diagram stored in the storage 13. In this case, the pipeline diagram creator 12 needs to specify the connected portion of the pipeline diagram stored in the storage 13 before creating the pipeline diagram by the input operation on the input region S.

In the manner described above, in this embodiment, the pipeline diagram creation support device 1 for supporting creation of a pipeline diagram includes: the display 11 that displays an input region S on which an input operation is performed in creating the pipeline diagram; the pipeline diagram creator 12 that creates the pipeline diagram by the input operation on the input region S; and the storage 13 that stores the pipeline diagram created by the pipeline diagram creator 12. The pipeline diagram creator 12 creates a pipeline diagram by connecting a symbol to a connected portion specified in the pipeline diagram stored in the storage 13 by the input operation on the input region S, or creates a new pipeline diagram by connecting, to the connected portion, a pipeline diagram as a connection target that is either another pipeline diagram stored in the storage 13 or another pipeline diagram created by the input operation on the input region S.

With the configuration described above, it is possible to create a pipeline diagram by connecting the symbol to the connected portion specified in the pipeline diagram stored in the storage 13 by the input operation on the input region S, or to create a new pipeline diagram by connecting, to the connected portion, the pipeline diagram as the target diagram that is either another pipeline diagram stored in the storage 13 or another pipeline diagram created by the input operation on the input region S.

This makes it easy to create a pipeline diagram connected to the connected portion of the pipeline diagram created and stored in the storage 13. Thus, a pipeline diagram can be easily created in accordance with the progress of construction and other situations.

In addition, in this embodiment, the pipeline diagram creator 12 specifies the connected portion in the pipeline diagram stored in the storage 13 by the input operation on the input region S.

This makes it easy to specify the connected portion in the pipeline diagram stored in the storage 13. Accordingly, pipeline diagrams can be easily connected to each other, and a pipeline diagram can be easily created by connecting the pipeline diagram to another created pipeline diagram. Thus, a pipeline diagram can be easily created in accordance with the progress of construction and other situations.

Further, in this embodiment, the storage 13 individually stores pipeline diagrams of pipes in a plurality of construction sections created by the pipeline diagram creator 12. The pipeline diagram creator 12 creates a pipeline diagram by connecting the connecting portion of the pipeline diagram created in the input region S by the input operation on the input region S, to the connected portion specified in each of the pipeline diagrams of pipes in the plurality of construction sections by the input operation on the input region S.

**In** this manner, a new pipeline diagram can be created by connecting the connected portions specified in each of the plurality of discontinuous pipeline diagrams. As a result, even in the case of performing discontinuous piping construction, a pipeline diagram can be easily created.

### (Variation)

In the embodiment, the pipeline diagram creator 12 creates the pipeline diagram by the input operation on the input region S. Alternatively, the pipeline diagram may be created by an input operation on a grid-shaped input region. This variation will be described below. In the following description, the same parts of the configuration as those of the pipeline diagram creation support device 1 of the first embodiment are denoted by the same reference numerals, and description thereof will be omitted.

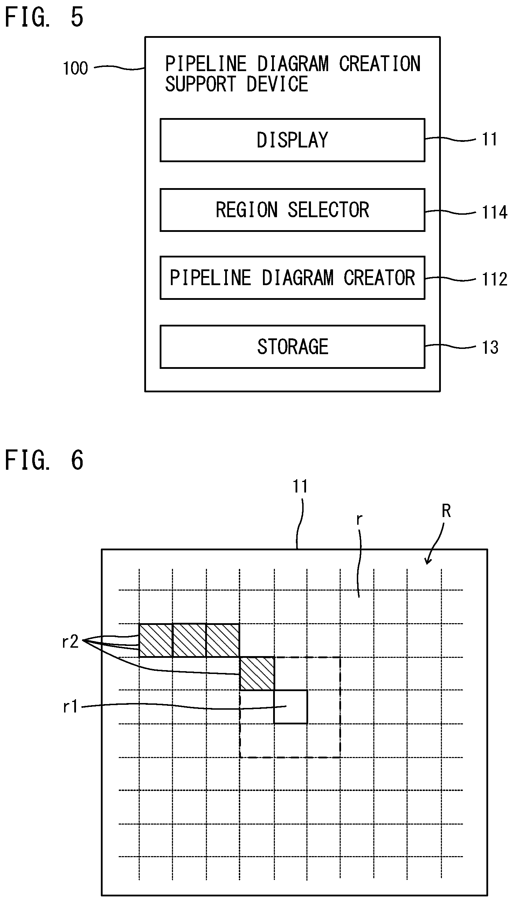

FIG. 5 is a functional block diagram illustrating a schematic configuration of a pipeline diagram creation support device 100 according to a variation of the first embodiment. The pipeline diagram creation support device 100 can easily create a pipeline diagram indicating a pipeline of water pipes by an input operation on a grid-shaped input region R. The pipeline diagram creation support device 100 supports creation of the pipeline diagram by an operator to enable intuitive and easy creation of the pipeline diagram.

The pipeline diagram creation support device 100 includes a display 11, a region selector 114, a pipeline diagram creator 112, and a storage 13. The pipeline diagram creation support device 100 may be implemented by a computation processing device such as a computer or a portable terminal capable of performing computation processing.

The configuration of the display 11 is the same as that of the display 1 of the first embodiment except for displaying the grid-shaped input region R on which an input operation can be performed.

The region selector 114 selects a region r in the grid-shaped input region R by an input operation on the input region R displayed on the display 11. Specifically, the region selector 114 is capable of selecting at least one of a plurality of rectangular regions r constituting the grid-shaped input region R by the input operation. The input operation may be a direct input to the display 11 or may be an input by an unillustrated input operator.

FIG. 6 is a view illustrating an example of a state where the plurality of regions r constituting the grid-shaped input region R are selected by the region selector 114. The region selector 114 is configured to select only regions r adjacent to the selected region r in the input region R. When a new region r is selected in the input region R, the region selector 114 holds regions r previously selected before selecting the new region r, as already selected regions r2. In the display 11, the currently selected region r1 and the already selected regions r2 are displayed in different colors so as to be distinguished from each other. In the example illustrated in FIG. 6, the currently selected region r1 is shown in white, and the already selected regions r2 are hatched.

The region selector 114 may surround or highlight regions r that can be selected next to the currently selected region r1, in the input region R displayed by the display 11. For example, in FIG. 6, the regions r that can be selected next to the currently selected region r1 are surrounded by a frame line indicated by a broken line. The region selector 114 may set regions r not adjacent to the other already selected regions r2, as regions r that can be selected next to the currently selected region r1.

The region selector 114 may also set regions r adjacent to the already selected region r2, as regions that can be selected. Accordingly, regions for drawing branch pipes can also be input in the input region R.

The adjacent regions refer to regions adjacent to a given region such that each of the adjacent regions has a side in contact with the given region, in a case where the regions r constituting the input region R are polygons. In a case where the regions r constituting the input region R are circles, the adjacent regions refer to regions in contact with a given region r.

The pipeline diagram creator 112 creates a pipeline diagram based on the adjacent already selected regions r2 in the input region R. Specifically, the pipeline diagram creator 112 creates a pipeline diagram based on pipe information associated with the already selected regions r2 and positional relationship of the already selected regions r2.

The pipeline diagram creator 112 creates a diagram of straight pipes in a case where the already selected regions r2 are aligned in one direction with sides thereof in contact with each other, for example. In this case, a diagram of straight pipes of the same type may be created in association with the remaining already selected regions r2, by using attribute data of pipes in one of the region r2 that was selected first. This can eliminate the time and effort of selecting pipe attributes for each of the already selected regions r2. In a portion where the already selected regions r2 are in contact with each other at corners, for example, the pipeline diagram creator 112 creates a diagram of bent pipes. In a portion where the already selected region r2 is branched in a plurality of directions, for example, the pipeline diagram creator 112 creates a diagram of branch pipes. That is, the pipeline diagram creator 112 changes the type of pipes and others for which a diagram is created, in accordance with the positional relationship among the already selected regions r2.

The pipe information used for creating a pipeline diagram by the pipeline diagram creator 112 may be information set beforehand in the pipeline diagram creation support device 100, or may be selected from a table or the like in selecting regions r in the input region R by the region selector 114. That is, the pipe information may be associated with the regions r in the input region R by any method as long as the pipe information is associated with the regions r in the input region R.

A part of the configuration of the pipeline diagram creator 112 not described above is the same as that of the pipeline diagram creator 12 of the first embodiment.

In the manner described above, in this embodiment, the pipeline diagram creation support device 100 further includes the region selector 114 that selects a plurality of regions for which an input operation is performed in the grid-shaped input region R as an input region displayed by the display 11. The pipeline diagram creator 112 creates a pipeline diagram based on the plurality of regions r selected by the region selector 114.

Accordingly, a pipeline diagram can be created based on the plurality of regions r selected by the input operation on the grid-shaped input region R. As a result, the pipeline diagram creation support device 100 capable of intuitively and easily creating a pipeline diagram can be obtained.

In this embodiment, the pipeline diagram creator 112 is configured to create a pipeline diagram in accordance with the positional relationship among the adjacent regions r selected by the region selector 114. The adjacent regions include not only regions arranged side by side but also regions arranged obliquely.

In this manner, various pipelines, including not only straight pipes but also bent pipes, branch pipes, and other types of pipes, can be easily created as a pipeline diagram, in accordance with the positional relationship among the adjacent regions r selected in the input region R. As a result, the pipeline diagram creation support device 100 that is highly versatile and capable of easily creating a pipeline diagram can be obtained.

In this embodiment, the region selector 114 is configured to select only regions r adjacent to the already selected regions r in the input region R.

Accordingly, an input operation can be performed to constitute a pipeline in performing an input to the grid-shaped input region R. As a result, a pipeline diagram can be intuitively and easily created.

### [Second Embodiment]

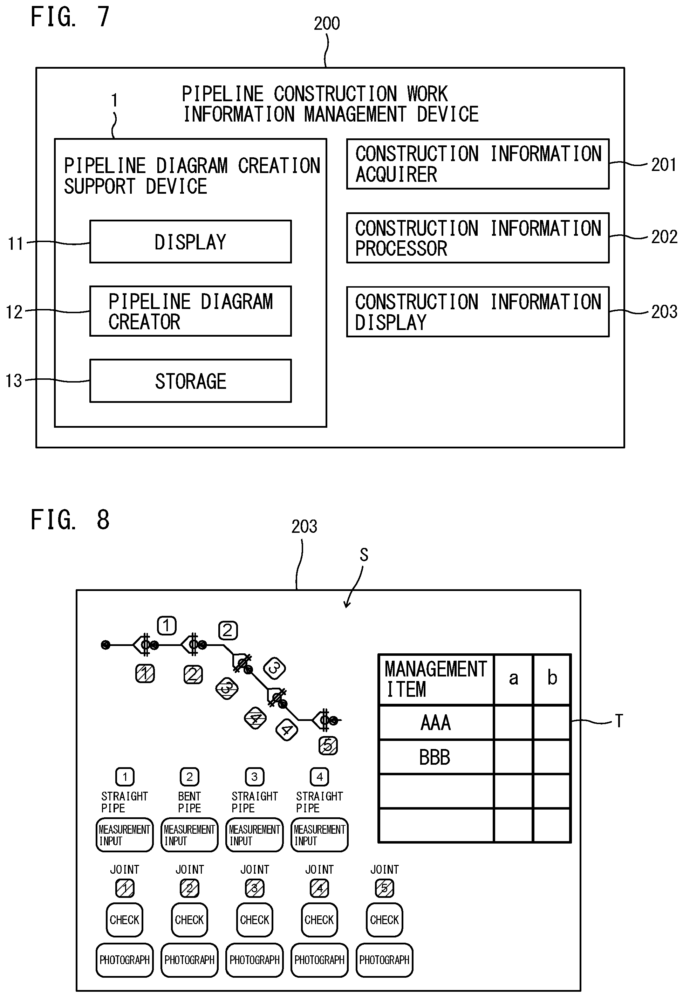

FIG. 7 is a functional block diagram illustrating a schematic configuration of a pipeline construction work information management device 200 including the pipeline diagram creation support device 1 according to the first embodiment. Description of the pipeline diagram creation support device 1 will be omitted. The pipeline construction work information management device 200 may include the pipeline diagram creation support device 100 according to the variation of the first embodiment.

The pipeline construction work information management device 200 includes the pipeline diagram creation support device 1 of the first embodiment, a construction information acquirer 201, a construction information processor 202, and a construction information display 203.

The construction information acquirer 201 acquires construction information of pipeline construction from an unillustrated support server, for example. The pipeline construction includes, for example, construction related to pipes such as water pipes and gas pipes. The construction information includes information on pipes such as the type and size of used for the pipeline construction, information on accessories such as valves used in the pipeline construction, information on earthwork in the pipeline construction, information on plumbing in the pipeline construction, and information on photographs taken in the pipeline construction.

The construction information processor 202 associates the construction information acquired by the construction information acquirer 201 with the position of a pipeline in the pipeline diagram created by the pipeline diagram creation support device 1. Accordingly, the construction information processor 202 associates each position of a pipeline in the pipeline diagram with the corresponding construction information.

In a case where a measurement result of a position of a rubber ring in a portion of a joint is associated with a joint of a pipeline as the construction information, for example, the construction information processor 202 acquires the measurement result by a manual input or an automatic input from a measurement device. The construction information processor 202 may be configured to select whether the measurement result is input manually or automatically.

The construction information display 203 displays a pipeline diagram created by the pipeline diagram creation support device 1 and, in a case where a position of a pipeline in the pipeline diagram is selected, also displays construction information associated with the position of the pipeline in the pipeline diagram by the construction information processor 202.

FIG. 8 is a view illustrating an example of a display screen on which a pipeline diagram is associated with construction information by the construction information processor 202. That is, FIG. 8 is an example of a screen displayed by the construction information display 203.

As illustrated in FIG. 8, when an icon such as a measurement input displayed on the screen is operated, for example, the construction information processor 202 associates each pipe in the pipeline diagram created by the pipeline diagram creation support device 1 with construction information on pipeline construction. In another case, when an icon such as a check mark or a photograph displayed on the screen is operated, for example, the construction information processor 202 associates each joint in the pipeline diagram created by the pipeline diagram creation support device 1 with construction information including information on a check result or a photograph.

As shown in the example of FIG. 8, construction information T such as measurement results of management items at a position of a pipeline can be displayed. That is, when an icon of a predetermined position of a pipeline is selected on the display screen, the construction information display 203 may display the construction information T associated with the predetermined position. The construction information T may include not only the measurement results but also information on construction such as a check content whether or not construction has been performed, construction date and time, and a person in charge. The construction information display 203 may display design information together with at least one of the pipeline diagram or the construction information.

The construction information processor 202 not only may associate each pipe and each joint with construction information as illustrated in FIG. 8, but also may associate the position specified in the pipeline diagram with the corresponding construction information.

In the manner described above, the pipeline construction work information management device 200 of this embodiment includes the pipeline diagram creation support device 1, the construction information acquirer 201 that acquires construction information of pipeline construction, the construction information processor 202 that associates a position of a pipeline in the pipeline diagram created by the pipeline diagram creation support device 1 with the construction information acquired by the construction information acquirer 201, and the construction information display 203 that displays the pipeline diagram and also specifies the position of the pipeline in the pipeline diagram to thereby display the construction information associated with the position.

In this manner, construction information of pipeline construction can be managed in association with the pipeline diagram. In addition, the construction information can be easily browsed from the pipeline diagram. As a result, working efficiency of pipeline construction can be enhanced.

The pipeline construction work information management device 200 may perform comprehensive determination at a predetermined timing using the acquired construction information and display the result on the construction information display 203. That is, the pipeline construction work information management device 200 may determine whether or not there is a management item not satisfying a criterion among management items included in the acquired construction information, as the comprehensive determination. The pipeline construction work information management device 200 may be configured such that if there is a management item not satisfying a criterion in the result of the comprehensive determination, pipeline construction work information management device 200 displays this management item on the construction information display 203 and promotes correction.

### [Third Embodiment]

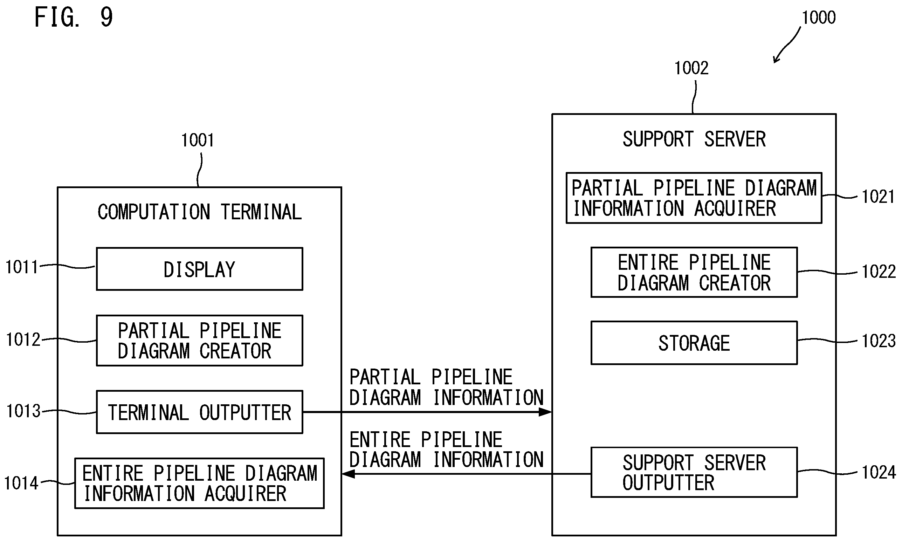

FIG. 9 is a functional block diagram illustrating a schematic configuration of a pipeline diagram creation support system 1000 for supporting creation of a pipeline diagram. The pipeline diagram creation support system 1000 includes a computation terminal 1001 and a support server 1002. In the pipeline diagram creation support system 1000, a partial pipeline diagram is created by an input to the computation terminal 1001, and the support server 1002 creates an entire pipeline diagram by using the partial pipeline diagram.

The computation terminal 1001 performs computation processing on information input to the computation terminal 1001 and is configured to transmit and receive information to/from the support server 1002 and display a processing result. The computation terminal 1001 is constituted by, for example, a computer or a portable terminal. The computation terminal 1001 may be a computation processing device having any configuration as long as the computation terminal 1001 performs computation processing on information input to the computation terminal 1001 and is configured to transmit and receive information to/from the support server 1002 and display the processing result. The computation terminal 1001 may be configured to output display data to a display other than the computation terminal.

The computation terminal 1001 includes a display 1011, a partial pipeline diagram creator 1012, a terminal outputter 1013, and an entire pipeline diagram information acquirer 1014. The display 1011 has the same configuration as that of the display 11 of the pipeline diagram creation support device 1 of the first embodiment. Thus, the display 1011 will not be described in detail.

The partial pipeline diagram creator 1012 creates a partial pipeline diagram by an input operation on the input region S displayed on the display 1011. The partial pipeline diagram creator 1012 has the same configuration as that of the pipeline diagram creator 12 of the pipeline diagram creation support device 1 of the first embodiment except for creating a partial pipeline diagram.

The partial pipeline diagram is created by the partial pipeline diagram creator 1012 and constitutes a portion of a pipeline diagram of pipeline construction. A plurality of such partial pipeline diagrams is connected to each other to thereby create a pipeline diagram of the pipeline construction.

The terminal outputter 1013 outputs, to the support server 1002, partial pipeline diagram information that is information on a partial pipeline diagram created by the partial pipeline diagram creator 1012. The terminal outputter 1013 includes, for example, a communication device capable of communicating with the support server 1002.

The entire pipeline diagram information acquirer 1014 acquires at least a part of information on an entire pipeline diagram created by the entire pipeline diagram creator 1022 of the support server 1002. The entire pipeline diagram information acquirer 1014 includes, for example, a communication device capable of communicating with the support server 1002. The display 1011 displays at least a part of the entire pipeline diagram information acquired by the entire pipeline diagram information acquirer 1014.

The support server 1002 includes a partial pipeline diagram information acquirer 1021, an entire pipeline diagram creator 1022, a storage 1023, and a support server outputter 1024.

The partial pipeline diagram information acquirer 1021 acquires partial pipeline diagram information on a partial pipeline diagram output from the terminal outputter 1013 of the computation terminal 1001. The acquired partial pipeline diagram information is stored in the storage 1023. The storage 1023 individually stores partial pipeline diagram information on partial pipeline diagrams of pipes in a plurality of construction sections, created by the partial pipeline diagram creator 1012.

The entire pipeline diagram creator 1022 creates an entire pipeline diagram by using at least a part of the partial pipeline diagram information acquired by the partial pipeline diagram information acquirer 1021 and the partial pipeline diagram information stored in the storage 1023. Specifically, the entire pipeline diagram creator 1022 creates the entire pipeline diagram by connecting, to a connected portion specified in a partial pipeline diagram included in the partial pipeline diagram information stored in the storage 1023, a partial pipeline diagram as a connection target that is either another partial pipeline diagram included in the partial pipeline diagram information acquired by the partial pipeline diagram information acquirer 1021 or another partial pipeline diagram included in the partial pipeline diagram information stored in the storage 1023. The connection of partial pipeline diagrams by the entire pipeline diagram creator 1022 is similar to the connection between pipeline diagrams by the pipeline diagram creator 12 in the first embodiment, and thus, will not be described in detail.

The storage 1023 stores entire pipeline diagram information on the entire pipeline diagram created by the entire pipeline diagram creator 1022. The storage 1023 is constituted by, for example, a storage device such as a hard disk device or a memory, or a storage medium.

The storage 1023 may store partial pipeline diagram information on a partial pipeline diagram created by the partial pipeline diagram creator 1012. The entire pipeline diagram creator 1022 may create an entire pipeline diagram by using the partial pipeline diagram information stored in the storage 1023.

The support server outputter 1024 outputs, to the computation terminal 1001, at least a part of entire pipeline diagram information on the entire pipeline diagram created by the entire pipeline diagram creator 1022. The support server outputter 1024 includes, for example, a communication device capable of communicating with the computation terminal 1001.

The partial pipeline diagram creator 1012 of the computation terminal 1001 may create a partial pipeline diagram such that the partial pipeline diagram is connected to a connected portion specified in a partial pipeline diagram included in the partial pipeline diagram information stored in the storage 1023, by an input operation on the input region S. In this manner, a portion of the entire pipeline diagram can be created. The thus-created partial pipeline diagram is output from the terminal outputter 1013 to the support server 1002 and stored in the storage 1023.

The partial pipeline diagram creator 1012 specifies the connected portion in the partial pipeline diagram included in the partial pipeline diagram information stored in the storage 1023, by the input operation to the input region R. Information on the specification of the connected portion is output from the terminal outputter 1013 to the support server 1002 and stored in the storage 1023, as a part of the partial pipeline diagram information.

In the manner described above, the pipeline diagram creation support system 1000 according to this embodiment is a system that includes the support server 1002 and the computation terminal 1001 capable of communicating with the support server 1002 and supports creation of a pipeline diagram. The computation terminal 1001 includes the display 1011 that displays the input region R on which an input operation is performed in creating the pipeline diagram, the partial pipeline diagram creator 1012 that creates a partial pipeline diagram by the input operation on the input region R, and the terminal outputter 1013 that outputs, to the support server 1002, partial pipeline diagram information on the partial pipeline diagram created by the partial pipeline diagram creator 1012. The support server 1002 includes the partial pipeline diagram information acquirer 1021 that acquires the partial pipeline diagram information from the computation terminal 1001, the storage 1023 that stores the partial pipeline diagram information acquired by the partial pipeline diagram information acquirer 1021, and the entire pipeline diagram creator 1022 that creates an entire pipeline diagram by using at least a part of the partial pipeline diagram information acquired by the partial pipeline diagram information acquirer 1021 and the partial pipeline diagram information stored in the storage 1023. The partial pipeline diagram creator 1012 creates a partial pipeline diagram such that the partial pipeline diagram is connected to a connected portion specified in a partial pipeline diagram included in partial pipeline diagram information stored in the storage 1023 by the input operation on input region R, or the entire pipeline diagram creator 1022 creates the entire pipeline diagram by connecting, to the connected portion specified in the partial pipeline diagram included in the partial pipeline diagram information stored in the storage 1023, a partial pipeline diagram as a connection target that is either another partial pipeline diagram included in the partial pipeline diagram information acquired by the partial pipeline diagram information acquirer 1021 or another pipeline diagram included in the partial pipeline diagram information stored in storage 1023.

In this manner, it is possible to create the entire pipeline diagram by connecting the connected portions specified in the partial pipeline diagrams stored in the storage 1023 by the input operation on the input region S, or to create the entire pipeline diagram by connecting, to the connected portion, a partial pipeline diagram as a connection target that is either another pipeline diagram stored in the storage 1023 or another partial pipeline diagram created by the input operation on the input region S.

By using the partial pipeline diagram, the support server 1002 can create the entire pipeline diagram. Accordingly, the support server 1002 can achieve creation of the entire pipeline diagram, which requires a large computation load.

Thus, with the configuration described above, the entire pipeline diagram can be easily created by using the small-size computation terminal 1001 such as a portable terminal. Accordingly, an entire pipeline diagram can be created at the site of pipeline construction.

**In** addition, in this embodiment, the partial pipeline diagram creator 1012 specifies the connected portion in the partial pipeline diagram included in the partial pipeline diagram information stored in the storage 1023, by the input operation on the input region R.

Accordingly, the connected portion can be easily specified in the partial pipeline diagram stored in the storage 1023 of the support server 1002. Thus, partial pipeline diagrams can be easily connected to each other, and an entire pipeline diagram connected to the partial pipeline diagram stored in the storage 1023 can be easily created. Thus, an entire pipeline diagram can be easily created in accordance with the progress of construction and other situations.

In this embodiment, the storage 1023 individually stores partial pipeline diagram information on partial pipeline diagrams of pipes in a plurality of construction sections, created by the partial pipeline diagram creator 1012. The entire pipeline diagram creator 1022 creates an entire pipeline diagram by connecting, to each of the connected portions specified in the partial pipeline diagrams of pipes in the plurality of construction sections, a connecting portion of a partial pipeline diagram as a connection target that is either a partial pipeline diagram included in the partial pipeline diagram information acquired by the partial pipeline diagram information acquirer 1021 or a partial pipeline diagram included in the partial pipeline diagram information stored in the storage 1023.

In this manner, the connecting portion of the partial pipeline diagram as the connection target is connected to each of the connected portions specified in the discontinuous plurality of partial pipeline diagrams to create an entire pipeline diagram. As a result, even in the case of performing discontinuous piping construction, an entire pipeline diagram can be easily created.

In addition, a plurality of computation terminals 1001 can create partial pipeline diagrams of pipes in a plurality of construction sections, and these partial pipeline diagrams are connected by the support server 1002 to thereby create an entire pipeline diagram. Accordingly, workability in creating a pipeline diagram in pipeline construction can be enhanced. In a case where the plurality of computation terminals 1001 create partial pipeline diagrams of pipes in a plurality of construction sections, in creating an entire pipeline diagram, transmission of information from one computation terminal 1001 to the support server 1002 may be restricted or priority may be given to information transmission from the plurality of computation terminals 1001 to the support server 1002, in order to prevent an input of conflicting instructions from the plurality of computation terminals 1001 to the support server 1002.

In this embodiment, the support server 1002 further includes the support server outputter 1024 that outputs, to the computation terminal 1001, at least a part of entire pipeline diagram information on the entire pipeline diagram created by the entire pipeline diagram creator 1022. The computation terminal 1001 further includes the entire pipeline diagram information acquirer 1014 that acquires at least a part of the entire pipeline diagram information from the support server 1002. The display 1011 of the computation terminal 1001 displays at least a part of the entire pipeline diagram information acquired by the entire pipeline diagram information acquirer 1014.

Accordingly, at least a part of the entire pipeline diagram created by the support server 1002 can be displayed on the display 1011 of the computation terminal 1001. Thus, for example, even at the site of pipeline construction, it is possible to easily check at least a part of the entire pipeline diagram using the computation terminal 1011. As a result, working efficiency of pipeline construction can be enhanced.

### (Pipeline Diagram Creation Support System Control Method)

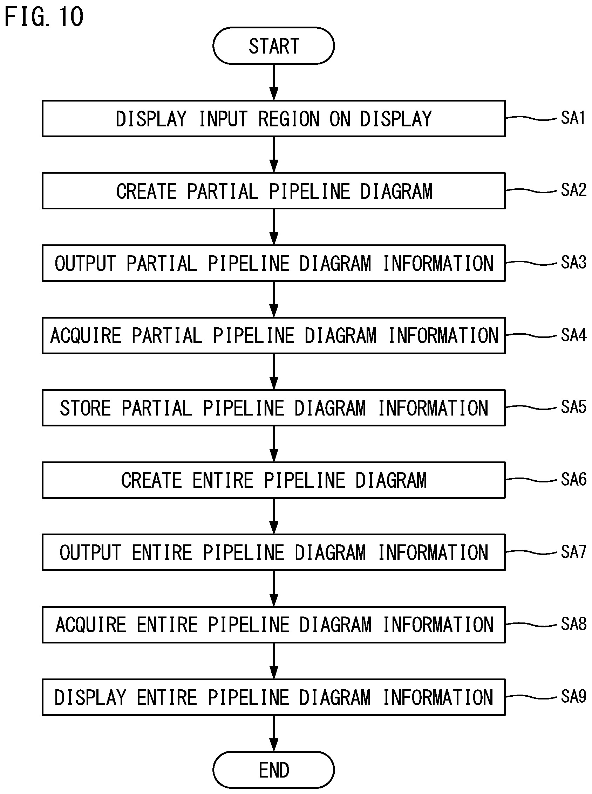

FIG. 10 is a flowchart showing a pipeline diagram creation support system control method performed by the pipeline diagram creation support system 1000 having the configuration described above. The pipeline diagram creation support system control method will be hereinafter described with reference to FIG. 10.

As shown in FIG. 10, this embodiment, first, when the flow starts (START), the computation terminal 1001 of the pipeline diagram creation support system 1000 displays the input region S on the display 1011 (step SA1). Then, by an input operation on the input region R displayed on the display 1011, the partial pipeline diagram creator 1012 of the computation terminal 1001 creates a partial pipeline diagram (step SA2). Partial pipeline diagram information that is information on the created partial pipeline diagram is output from the terminal outputter 1013 of the computation terminal 1001 to the support server 1002 (step SA3).

In the support server 1002, the partial pipeline diagram information acquirer 1021 acquires the partial pipeline diagram information (step SA4). The storage 1023 of the support server 1002 stores the partial pipeline diagram information acquired by the partial pipeline diagram information acquirer (step SA5).

Thereafter, the entire pipeline diagram creator 1022 of the support server 1002 creates an entire pipeline diagram by using at least a part of the partial pipeline diagram information acquired by the partial pipeline diagram information acquirer 1021 and the partial pipeline diagram information stored in the storage 1023 (step SA6). Entire pipeline diagram information that is information on the created entire pipeline diagram is output from the support server outputter 1024 of the support server 1002 to the computation terminal 1001 (step SA7).

The entire pipeline diagram information acquirer 1014 of the computation terminal 1001 acquires the entire pipeline diagram information output from the support server outputter 1024 (step SA8). The display 1011 of the computation terminal 1001 displays the acquired entire pipeline diagram information (step SA9). Subsequently, the flow ends (END).

Here, step SA1 corresponds to an input region display step, step SA2 corresponds to a partial pipeline diagram creation step, step SA3 corresponds to a partial pipeline diagram information output step, step SA4 corresponds to a partial pipeline diagram information acquisition step, step SA5 corresponds to a storage step, and step SA6 corresponds to an entire pipeline diagram creation step.

In this manner, the support server 1002 can create an entire pipeline diagram by using a partial pipeline diagram created by the computation terminal 1001. Accordingly, the entire pipeline diagram can be created in the support server 1002 without an increase in computation load of the computation terminal 1001.

In addition, the entire pipeline diagram created in the support server 1002 can be displayed on the computation terminal 1001. Accordingly, even at the site of pipeline construction, the entire pipeline diagram can be easily displayed on the computation terminal 1001, and working efficiency of pipeline construction can be enhanced.

In the partial pipeline diagram creation step SA2, a partial pipeline diagram may be created such that the partial pipeline diagram is connected to a connected portion specified in a partial pipeline diagram included in partial pipeline diagram information stored in the storage 1023 of the support server 1002 by an input operation on the input region S.

In the manner described above, the pipeline diagram creation support system control method according to this embodiment is a method for controlling the pipeline diagram creation support system 1000 that includes the support server 1002 and the computation terminal 1001 capable of communicating with the support server 1002 and supports creation of a pipeline diagram. The pipeline diagram creation support system control method includes: the input region display step SA1 of causing the display 1011 of the computation terminal 1001 to display the input region R on which an input operation is performed in creating the pipeline diagram; the partial pipeline diagram creation step SA2 of causing the computation terminal 1001 to create a partial pipeline diagram by an the input operation on the input region R displayed on the display 1011 of the computation terminal 1001; the partial pipeline diagram information output step SA3 of causing the computation terminal 1001 to output, to the support server 1002, partial pipeline diagram information on the partial pipeline diagram created in the partial pipeline diagram creation step SA2; the partial pipeline diagram information acquisition step SA4 of causing the support server 1002 to acquire the partial pipeline diagram information from the computation terminal 1001; the storage step SA5 of causing the support server 1002 to store the partial pipeline diagram information acquired in the partial pipeline diagram information acquisition step SA4; and the entire pipeline diagram creation step SA6 of causing the support server 1002 to create an entire pipeline diagram by using at least a part of the partial pipeline diagram information acquired in the partial pipeline diagram information acquisition step SA4 and the partial pipeline diagram information stored in the support server 1002. In the partial pipeline diagram creation step SA2, the partial pipeline diagram is created to connect to a connected portion specified in the partial pipeline diagram included in the partial pipeline diagram information stored in the support server 1002 by the input operation on the input region R, or in the entire pipeline diagram creation step SA6, the entire pipeline diagram is created by connecting, to the connected portion specified in the partial pipeline diagram included in the partial pipeline diagram information stored in the support server 1002, a partial pipeline diagram as a connection target that is either another partial pipeline diagram included in the partial pipeline diagram information acquired in the partial pipeline diagram information acquisition step SA4 or another pipeline diagram included in the partial pipeline diagram information stored in the support server 1002.

With the method described above, it is possible to create the entire pipeline diagram by connecting symbols or the like to the connected portion specified in the partial pipeline diagram stored in the support server 1002 by the input operation on the input region S, or to create the entire pipeline diagram by connecting, to the connected portion, a partial pipeline diagram as a connection target that is either another pipeline diagram stored in the support server 1002 or another pipeline diagram created by the input operation on the input region S.

By using the partial pipeline diagram, the support server 1002 can create the entire pipeline diagram. Accordingly, the support server 1002 can achieve creation of the entire pipeline diagram, which requires a large computation load.

Thus, with the method described above, the entire pipeline diagram can be easily created by using the small-size computation terminal 1001 such as a portable terminal. Accordingly, an entire pipeline diagram can be created at the site of pipeline construction.

In this embodiment, in the partial pipeline diagram creation step SA2, the connected portion in the partial pipeline diagram included in the partial pipeline diagram information stored in the support server 1002 is specified by the input operation on the input region S.

Accordingly, the connected portion can be easily specified in the partial pipeline diagram stored in the support server 1002. Thus, partial pipeline diagrams can be easily connected to each other, and an entire pipeline diagram connected to the partial pipeline diagram stored in the support server 1002 can be easily created. Thus, an entire pipeline diagram can be easily created in accordance with the progress of construction and other situations.

In this embodiment, in the storage step SA5, partial pipeline diagram information on partial pipeline diagrams of pipes in a plurality of construction sections, created in partial pipeline diagram creation step SA2 is individually stored. In the entire pipeline diagram creation step SA6, an entire pipeline diagram is created by connecting, to each of the connected portions specified in partial pipeline diagrams of pipes in the plurality of construction sections, a connecting portion of a partial pipeline diagram as a connection target that is either a partial pipeline diagram included in the partial pipeline diagram information acquired in the partial pipeline diagram information acquisition step SA4 or a partial pipeline diagram included in the partial pipeline diagram information stored in the support server 1002.

In this manner, the connecting portion of the partial pipeline diagram as the connection target is connected to each of the connected portions specified in the plurality of discontinuous partial pipeline diagrams to create an entire pipeline diagram. As a result, even in the case of performing discontinuous piping construction, an entire pipeline diagram can be easily created.

### (Pipeline Diagram Creation Support System Control Program)

It is sufficient that a program (pipeline diagram creation support system control program) in this embodiment is a program that causes the computation terminal 1001 and the support server 1002 constituting the pipeline diagram creation support system 1000 to perform steps SA1 through SA6 shown in FIG. 10. By performing the program by the computation terminal 1001 and the support server 1002, the pipeline diagram creation support system 1000 and the pipeline diagram creation support system control method in this embodiment can be implemented. In this case, the computation terminal 1001 and the support server 1002 may be general-purpose computers or dedicated computers. Each computer incorporates, for example, a central processing unit (CPU) and performs computation processing by the CPU.

The pipeline diagram creation support system control program according to this embodiment is a program for controlling the pipeline diagram creation support system 1000 that includes the support server 1002 and the computation terminal 1001 capable of communicating with the support server 1002 and supports creation of a pipeline diagram. The pipeline diagram creation support system control program causes the computation terminal 1001 to display an input region S on which an input operation is performed in creating the pipeline diagram, to create a partial pipeline diagram by an input operation on the input region S, and to output partial pipeline diagram information on the created partial pipeline diagram to the support server 1002. The program also causes the support server 1002 to acquire partial pipeline diagram information on the partial pipeline diagram created by the computation terminal 1001, to store the acquired partial pipeline diagram information in the storage 1023, to create an entire pipeline diagram by using at least a part of the acquired partial pipeline diagram information and the partial pipeline diagram information stored in the storage 1023, causes the computation terminal 1001 either to create a partial pipeline diagram such that the partial pipeline diagram is connected to a connected portion specified in the partial pipeline diagram included in the partial pipeline diagram information stored in the storage 1023 by the input operation on the input region S, or causes the support server 1002 to connect a partial pipeline diagram as a connection target that is either another partial pipeline diagram included in the partial pipeline diagram information acquired by the partial pipeline diagram information acquirer 1021 or another partial pipeline diagram included in the partial pipeline diagram information stored in the storage 1023, to a connected portion specified in the partial pipeline diagram included in the partial pipeline diagram information stored in the storage 1023, in creating the entire pipeline diagram.

With the configuration described above, it is possible to create the entire pipeline diagram by connecting symbols or the like to the connected portion specified in the partial pipeline diagram stored in the storage 1023 by an input operation on the input region, or to create the entire pipeline diagram by connecting, to the connected portion, a partial pipeline diagram as a connection target that is either another partial pipeline diagram stored in the storage 1023 or another partial pipeline diagram created by an input operation on the input region.

By using the partial pipeline diagram, the support server 1002 can create the entire pipeline diagram. Accordingly, the support server 1002 can achieve creation of the entire pipeline diagram, which requires a large computation load.

Thus, with the method described above, the entire pipeline diagram can be easily created by using the small-size computation terminal 1001 such as a portable terminal. Accordingly, an entire pipeline diagram can be created at the site of pipeline construction.

In this embodiment, the pipeline diagram creation support system control program causes the computation terminal 1001 to specify the connected portion in the partial pipeline diagram included the partial pipeline diagram information stored in the storage 1023, by the input operation on the input region S.

Accordingly, the connected portion can be easily specified in the partial pipeline diagram stored in the storage 1023 of the support server 1002. Thus, partial pipeline diagrams can be easily connected to each other, and an entire pipeline diagram connected to the partial pipeline diagram stored in the storage 1023 can be easily created. Thus, an entire pipeline diagram can be easily created in accordance with the progress of construction and other situations.

In this embodiment, the pipeline diagram creation support system control program causes the support server 1002 to individually store, in the storage 1023, partial pipeline diagram information on partial pipeline diagrams of pipes in the plurality of construction sections created by the computation terminal 1001. In creating the entire pipeline diagram, the support server 1002 creates the entire pipeline diagram by connecting, to the connected portion, a partial pipeline diagram as a connection target that is either another partial pipeline diagram included in the partial pipeline diagram information acquired by the partial pipeline diagram information acquirer 1021 or another partial pipeline diagram included in the partial pipeline diagram information stored in the storage 1023.

Accordingly, the entire pipeline diagram created by the support server 1002 can be displayed on the display 1011 of the computation terminal 1001. Thus, for example, even at the site of pipeline construction, it is possible to easily check the entire pipeline diagram using the computation terminal. As a result, working efficiency of pipeline construction can be enhanced.

### (Variations)

In this embodiment, in a manner similar to the first embodiment, the pipeline diagram may be created by an input operation on a grid-shaped input region. In the following description, the same parts of the configuration as those of the pipeline diagram creation support system 1000 of the second embodiment are denoted by the same reference numerals, and description thereof will be omitted.

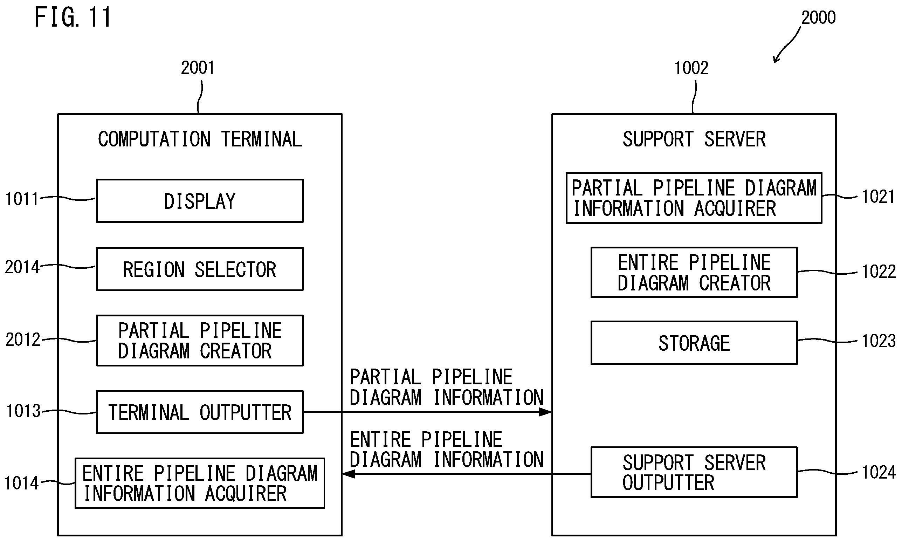

FIG. 11 is a functional block diagram illustrating a schematic configuration of a pipeline diagram creation support system 2000 according to a variation of the second embodiment. The pipeline diagram creation support system 2000 includes a computation terminal 2001 and a support server 1002.

The computation terminal 2001 includes a display 1011, a region selector 2014, a partial pipeline diagram creator 2012, a terminal outputter 1013, and an entire pipeline diagram information acquirer 1014. The region selector 2014 has the same configuration as that of the region selector 114 in the variation of the first embodiment. The partial pipeline diagram creator 2012 has the same configuration as that of the pipeline diagram creator 112 in the variation of the first embodiment. Thus, the region selector 2014 and the partial pipeline diagram creator 2012 will not be described in detail.

As described above, in this embodiment, the display 1011 displays a grid-shaped input region R as an input region. The computation terminal 2001 further includes the region selector 2014 that selects a plurality of regions for which an input operation is performed on the input region R. The partial pipeline diagram creator 2012 creates a partial pipeline diagram based on a plurality of regions r2 selected by the region selector 2014.

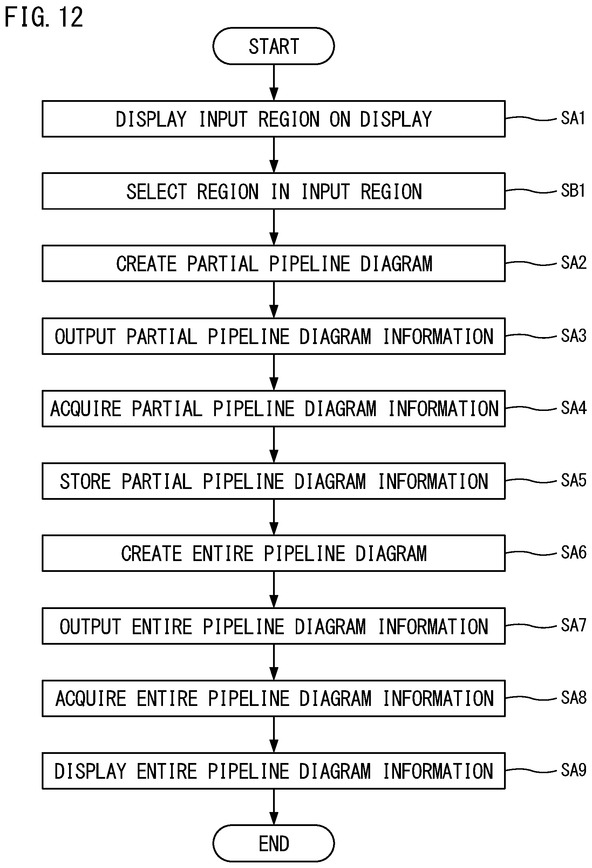

FIG. 12 is a flowchart showing a pipeline diagram creation support system control method performed by the pipeline diagram creation support system 2000 having the configuration described above. The pipeline diagram creation support system control method of this variation is different from the pipeline diagram creation support system control method of the second embodiment in including a region selecting step SB1 of causing the region selector 2014 to select a region for which an input operation is performed in a plurality of regions r constituting the input region R after the display 1011 displays the grid-shaped input region R, and in that the partial pipeline diagram creator 2012 creates a partial pipeline diagram based on the selected regions r2.

The other steps are the same as the flow of the pipeline diagram creation support system control method of the second embodiment. Thus, the same steps as those in the pipeline diagram creation support system control method of the second embodiment are denoted by the same reference numerals, and description thereof will be omitted.

The same step as that in the variation of the first embodiment is that after the display 1011 displays the grid-shaped input region R, the region selector 2014 selects a region for which an input operation is performed in the plurality of regions r constituting the input region R, and the partial pipeline diagram creator 2012 creates a partial pipeline diagram based on the selected regions r2. Thus, operation of the display 1011, the region selector 2014, and the partial pipeline diagram creator 2012 will not be described in detail.

The pipeline diagram creation support system control method further includes the region selecting step SB1 of selecting a plurality of regions for which an input operation is performed in the grid-shaped input region R as the input region displayed in the input region display step SA1. The partial pipeline diagram creation step SA2 creates a partial pipeline diagram based on the plurality of regions r2 selected in the region selecting step SB1.

It is sufficient that a program (pipeline diagram creation support system control program) in this variation is a program that causes the computation terminal 2001 and the support server 1002 constituting the pipeline diagram creation support system 2000 to perform steps SA1, SB1, and SA2 through SA6 shown in FIG. 12. By performing the program by the computation terminal 1001 and the support server 1002, the pipeline diagram creation support system 2000 and the pipeline diagram creation support system control method in this variation can be implemented.

The pipeline diagram creation support system control program causes the computation terminal 2001 to display the grid-shaped input region R on the display 1011, select the plurality of regions for which an input operation is performed in the input region R, and create the partial pipeline diagram based on the plurality of selected regions r2.

The pipeline diagram creation support system 2000, the pipeline diagram creation support system control method, and the pipeline diagram creation support system control program described above can intuitively and easily create a partial pipeline diagram by the input operation on the grid-shaped input region R.

### (Other Embodiments)

The embodiments of the present teaching have been described above, but the embodiments are merely examples for carrying out the present teaching. Thus, the teaching is not limited to the embodiments, and the embodiments may be modified as necessary within a range not departing from the gist of the teaching.

In the embodiments described above, the pipeline diagram creation support device 1,100 and the pipeline diagram creation support system 1000, 2000 support creation of a pipeline diagram showing a pipeline of water pipes. Alternatively, the pipeline diagram creation support device and the pipeline diagram creation support system may support creation of a pipeline of pipes including sewerage pipes, gas pipes, underground buried pipes, and agricultural water passages. The pipeline diagram creation support device and the pipeline diagram creation support system may be used for creating a pipeline diagram of a polyethylene pipes, as well as iron pipes. Similarly, the pipeline construction work information management device may also manage construction information of work in pipes including sewerage pipes, gas pipes, underground buried pipe, agricultural water passages, as well as water pipes. The pipeline construction work information management device may manage construction information of work of polyethylene pipes, as well as iron pipes.

In the second embodiment, the pipeline construction work information management device 200 includes the construction information display 203. Alternatively, the pipeline construction work information management device may not include the construction information display. The construction information display may be a display of the pipeline diagram creation support device.

In the third embodiment, the computation terminal 1001, 2001 of the pipeline diagram creation support system 1000, 2000 creates a partial pipeline diagram. The support server 1002 creates an entire pipeline diagram. Alternatively, the support server may create a partial pipeline diagram. The computation terminal may create an entire pipeline diagram.

In the third embodiment, the computation terminal 1001, 2001 acquires at least a part of the entire pipeline diagram information from the support server 1002 and displays the acquired information on the display 1011. Alternatively, the computation terminal may not display the entire pipeline diagram information on the display and may not acquire the entire pipeline diagram information from the support server.

In the third embodiment, the pipeline diagram creation support system 1000, 2000 includes the computation terminal 1001, 2001. Alternatively, the pipeline diagram creation support system may include a plurality of computation terminals. The plurality of computation terminals may create partial pipeline diagrams of different construction sections. In this case, the support server or the computation terminals may directly connect the partial pipeline diagrams of the different construction sections or may connect these partial pipeline diagrams via another partial pipeline diagram.

### INDUSTRIAL APPLICABILITY

The present teaching is applicable to a pipeline diagram creation support device for supporting creation of a pipeline diagram.

### REFERENCE SIGNS LIST

1, 100 pipeline diagram creation support device
11, 1011 display
12 pipeline diagram creator
13 storage
114, 2014 region selector
200 pipeline construction work information management device
201 construction information acquirer
202 construction information processor
203 construction information display
1000, 2000 pipeline diagram creation support system
1001 computation terminal
1002 support server
1012 partial pipeline diagram creator
1013 terminal outputter
1014 entire pipeline diagram information acquirer
1021 partial pipeline diagram information acquirer
1022 entire pipeline diagram creator
1023 storage
1024 support server outputter
S, R input region
r region
r1 currently selected region
r2 selected region
T construction information

## Claims

1. A pipeline diagram creation support device for supporting creation of a pipeline diagram, the pipeline diagram creation support device comprising:
a display that displays an input region on which an input operation is performed in creating the pipeline diagram;
a pipeline diagram creator that creates the pipeline diagram by the input operation on the input region; and
a storage that stores the pipeline diagram created by the pipeline diagram creator, wherein
the pipeline diagram creator
creates a pipeline diagram by connecting a symbol to a connected portion specified in the pipeline diagram stored in the storage, or creates a new pipeline diagram by connecting, to the connected portion, a pipeline diagram as a connection target that is either another pipeline diagram stored in the storage or another pipeline diagram created by the input operation on the input region,
by the input operation on the input region.

2. The pipeline diagram creation support device according to claim 1, wherein
the pipeline diagram creator specifies the connected portion in the pipeline diagram stored in the storage by the input operation on the input region.

3. The pipeline diagram creation support device according to claim 1, wherein
the storage individually stores pipeline diagrams of pipes in a plurality of construction sections, created by the pipeline diagram creator, and
the pipeline diagram creator creates the new pipeline diagram by connecting a connecting portion of a pipeline diagram created in the input region by the input operation on the input region, to the connected portion specified in each of the pipeline diagrams of pipes in the plurality of construction sections by the input operation on the input region.

4. The pipeline diagram creation support device according to claim 1, further comprising
a region selector that selects a plurality of regions for which an input operation is performed, in a grid-shaped input region as the input region displayed by the display, wherein
the pipeline diagram creator creates the new pipeline diagram based on the plurality of regions selected by the region selector.

5. A pipeline construction work information management device including the pipeline diagram creation support device according to any one of claims 1 to 4, the pipeline construction work information management device comprising:
a construction information acquirer that acquires construction information of pipeline construction;
a construction information processor that associates a position of a pipeline in the pipeline diagram created by the pipeline diagram creation support device with the construction information acquired by the construction information acquirer; and
a construction information display that displays the pipeline diagram and specifies the position of the pipeline in the pipeline diagram to thereby display the construction information associated with the position.

6. A pipeline diagram creation support system that includes a support server and a computation terminal capable of communicating with the support server and supports creation of a pipeline diagram, wherein
the computation terminal includes
a display that displays an input region on which an input operation is performed in creating the pipeline diagram,
a partial pipeline diagram creator that creates a partial pipeline diagram by the input operation on the input region, and
a terminal outputter that outputs, to the support server, partial pipeline diagram information on the partial pipeline diagram created by the partial pipeline diagram creator,
the support server includes
a partial pipeline diagram information acquirer that acquires the partial pipeline diagram information from the computation terminal,
a storage that stores the partial pipeline diagram information acquired by the partial pipeline diagram information acquirer, and
an entire pipeline diagram creator that creates an entire pipeline diagram by using at least a part of the partial pipeline diagram information acquired by the partial pipeline diagram information acquirer and the partial pipeline diagram information stored in the storage, and
the partial pipeline diagram creator creates a partial pipeline diagram by connecting a symbol to a connected portion specified in the partial pipeline diagram included in the partial pipeline diagram information stored in the storage by the input operation on the input region, or the entire pipeline diagram creator creates the entire pipeline diagram by connecting, to the connected portion specified in the partial pipeline diagram included in the partial pipeline diagram information stored in the storage, a partial pipeline diagram as a connection target that is either another partial pipeline diagram included in the partial pipeline diagram information acquired by the partial pipeline diagram information acquirer or another partial pipeline diagram included in the partial pipeline diagram information stored in the storage.

7. The pipeline diagram creation support system according to claim 6, wherein
the partial pipeline diagram creator specifies the connected portion in the partial pipeline diagram included in the partial pipeline diagram information stored in the storage, by the input operation on the input region.

8. The pipeline diagram creation support system according to claim 6, wherein
the storage individually stores partial pipeline diagram information on partial pipeline diagrams of pipes in a plurality of construction sections, created by the partial pipeline diagram creator, and
the entire pipeline diagram creator creates the entire pipeline diagram by connecting, to a connected portion specified in each of the partial pipeline diagrams of pipes in the plurality of construction sections, a connecting portion of a partial pipeline diagram as a connection target that is either a partial pipeline diagram included in the partial pipeline diagram information acquired by the partial pipeline diagram information acquirer or a partial pipeline diagram included in the partial pipeline diagram information stored in the storage.

9. The pipeline diagram creation support system according to claim 6, wherein
the display displays a grid-shaped input region as the input region,
the computation terminal further includes a region selector that selects a plurality of regions for which the input operation is performed on the input region, and
the partial pipeline diagram creator creates the partial pipeline diagram based on the plurality of regions selected by the region selector.

10. The pipeline diagram creation support system according to claim 6, wherein
the support server further includes
a support server outputter that outputs, to the computation terminal, at least a part of entire pipeline diagram information on the entire pipeline diagram created by the entire pipeline diagram creator,
the computation terminal further includes
an entire pipeline diagram information acquirer that acquires at least a part of the entire pipeline diagram information from the support server, and
the display of the computation terminal displays at least a part of the entire pipeline diagram information acquired by the entire pipeline diagram information acquirer.

11. A method for controlling a pipeline diagram creation support system that includes a support server and a computation terminal capable of communicating with the support server and supports creation of a pipeline diagram, the pipeline diagram creation support system control method comprising:
an input region display step of causing a display of the computation terminal to display an input region on which an input operation is performed in creating the pipeline diagram;
a partial pipeline diagram creation step of causing the computation terminal to create a partial pipeline diagram by the input operation on the input region displayed on the display of the computation terminal;
a partial pipeline diagram information output step of causing the computation terminal to output, to the support server, partial pipeline diagram information on the partial pipeline diagram created in the partial pipeline diagram creation step;
a partial pipeline diagram information acquisition step of causing the support server to acquire the partial pipeline diagram information from the computation terminal;
a storage step of causing the support server to store the partial pipeline diagram information acquired in the partial pipeline diagram information acquisition step; and
an entire pipeline diagram creation step of causing the support server to create an entire pipeline diagram by using at least a part of the partial pipeline diagram information acquired in the partial pipeline diagram information acquisition step and the partial pipeline diagram information stored in the support server, wherein
in the partial pipeline diagram creation step, the partial pipeline diagram is created by connecting a symbol to a connected portion specified in the partial pipeline diagram included in the partial pipeline diagram information stored in the support server by the input operation on the input region, or in the entire pipeline diagram creation step, the entire pipeline diagram is created by connecting, to the connected portion specified in the partial pipeline diagram included in the partial pipeline diagram information stored in the support server, a partial pipeline diagram as a connection target that is either another partial pipeline diagram included in the partial pipeline diagram information acquired in the partial pipeline diagram information acquisition step or another partial pipeline diagram included in the partial pipeline diagram information stored in the support server.

12. The pipeline diagram creation support system control method according to claim 11, wherein
in the partial pipeline diagram creation step, the connected portion in the partial pipeline diagram included in the partial pipeline diagram information stored in the support server is specified by the input operation on the input region.

13. The pipeline diagram creation support system control method according to claim 11, wherein
in the storage step, partial pipeline diagram information on partial pipeline diagrams of pipes in a plurality of construction sections, created in the partial pipeline diagram creation step is individually stored, and
in the entire pipeline diagram creation step, the entire pipeline diagram is created by connecting, to the connected portion specified in each of the partial pipeline diagrams of pipes in the plurality of construction sections, a connecting portion of a partial pipeline diagram as a connection target that is either a partial pipeline diagram included in the partial pipeline diagram information acquired in the partial pipeline diagram information acquisition step or a partial pipeline diagram included in the partial pipeline diagram information stored in the support server.

14. The pipeline diagram creation support system control method according to claim 11, further comprising
a region selecting step of selecting a plurality of regions for which an input operation is performed, in a grid-shaped input region as the input region displayed in the input region display step, and
in the partial pipeline diagram creation step, the partial pipeline diagram is created based on the plurality of regions selected in the region selecting step.

15. A pipeline diagram creation support system control program for controlling a pipeline diagram creation support system that includes a support server and a computation terminal capable of communicating with the support server and supports creation of a pipeline diagram, the pipeline diagram creation support system control program causing the computation terminal to
display an input region on which an input operation is performed in creating the pipeline diagram,
create a partial pipeline diagram by the input operation on the input region, and
output, to the support server, partial pipeline diagram information on the created partial pipeline diagram,
causing the support server to
acquire the partial pipeline diagram information on the partial pipeline diagram created by the computation terminal,
store the acquired partial pipeline diagram information in a storage, and
create an entire pipeline diagram by using at least a part of the acquired partial pipeline diagram information and the partial pipeline diagram information stored in the storage, and
causing the computation terminal to create a partial pipeline diagram by connecting a symbol to a connected portion specified in the partial pipeline diagram included in the partial pipeline diagram information stored in the storage by the input operation on the input region, or causing the support server to create the entire pipeline diagram by connecting, to the connected portion specified in the partial pipeline diagram included in the partial pipeline diagram information stored in the storage, a partial pipeline diagram as a connection target that is either another partial pipeline diagram included in the acquired partial pipeline diagram information or another partial pipeline diagram included in the partial pipeline diagram information stored in the storage, in creating the entire pipeline diagram.

16. The pipeline diagram creation support system control program according to claim 15, causing the computation terminal to specify the connected portion in the partial pipeline diagram included in the partial pipeline diagram information stored in the storage by an input operation on the input region.

17. The pipeline diagram creation support system control program according to claim 15, causing the support server to
individually store, in the storage, partial pipeline diagram information on partial pipeline diagrams of pipes in a plurality of construction sections created by the computation terminal, and
create the entire pipeline diagram by connecting, to the connected portion, a partial pipeline diagram as a connection target that is either another partial pipeline diagram included in the acquired partial pipeline diagram information or another partial pipeline diagram included in the partial pipeline diagram information stored in the storage, in creating the entire pipeline diagram.

18. The pipeline diagram creation support system control program according to claim 15, causing the computation terminal to
display a grid-shaped input region on a display,
select a plurality of regions for which an input operation is performed on the input region, and
create the partial pipeline diagram based on the selected plurality of regions.
